# EUROPÄISCHE PATENTANMELDUNG

(11) **EP 0 750 980 A2**
(43) Veröffentlichungstag der Anmeldung: **02.01.1997**
(21) Anmeldenummer: 96101725.8
(22) Anmeldetag: 07.02.1996
(51) Int. Cl.: B29C 69/00, B29C 45/06

(54) **Verfahren und Vorrichtung zum Spritzgiessen**

(30) Priorität: 10.02.1995 DE 19504332
(71) Anmelder: FWB GmbH Kunststofftechnik, 66955 Pirmasens (DE)
(72) Erfinder: Siewert, Georg, Dipl. Ing., D-66957 Vinningen (DE)
(74) Vertreter: Schmid, Rudolf, Dipl.-Ing., Patentanwalt

(57) **Zusammenfassung**

Die Erfindung betrifft ein Verfahren und eine Vorrichtung zum Spritzgießen von Einzelteilen und zum Montieren von Einzelteilen zu Baugruppen mit einem Werkzeug (1), einer ersten Montageeinheit (2) dieses Werkzeugs (1), die mit einer Oberseite (3) eine Ebene aufspannt, einer zweiten Montageeinheit (5) dieses Werkzeugs (1), die sowohl parallel als auch senkrecht relativ zu der Ebene der ersten Montageeinheit (2) dieses Werkzeugs (1) zueinander beweglich sind, und Arbeitsnestern (11, 12, 13, 14, 15, 16, 17, 18, 19, 20) an der Oberseite (3) der ersten Montageeinheit (2). Eine Unterseite der zweiten Montageeinheit (5) ist mit Formnestern (31, 32, 33, 34, 35, 36, 37, 38, 39 und 40) versehen, die mit den Arbeitsnestern (11, 12, 13, 14, 15, 16, 17, 18, 19, 20) zur Deckung kommen können, wenn die Unterseite der zweiten Montageeinheit (5) auf der Oberseite (3) der ersten Montageeinheit (2) aufliegt. In mehreren Schritten eines Arbeitszyklusses werden die Einzelteile gespritzt.

## Beschreibung

Die Erfindung betrifft ein Verfahren und eine Vorrichtung zum Spritzgießen von Einzelteilen, insbesondere von Einzelteilen aus Kunststoff, und zum Montieren dieser Einzelteile zu Baugruppen mit den Merkmalen der Oberbegriffe des Anspruchs 1 und des Anspruchs 2.

Bekannt ist aus der DE-C 33 40 122 ein Verfahren zum Spritzgießen von Gegenständen aus Kunststoff, die unlösbar und gegeneinander beweglich verbunden sind. Das Verfahren setzt sich aus mehreren voneinander örtlich und zeitlich getrennten Spritzvorgängen zusammen, wobei in einem ersten Spritzvorgang in einem ersten Spritznest einer ersten Montageeinheit ein Grundkörper gefertigt wird. Eine zweite Montageeinheit hebt den Grundkörper aus dem ersten Spritznest und transportiert durch eine Drehung relativ zur ersten Montageeinheit den Grundkörper aus dem ersten Spritznest in ein zweites Spritznest, in dem dann in einem weiteren Spritzvorgang zusätzliche Komponenten an den Grundkörper angeformt werden können. An den Grundkörper mit den zusätzlichen Komponenten können nach dem beschriebenen Schema in weiteren Spritznestern weitere Komponenten angegossen werden, bis der Gegenstand komplett ist. Gemäß dem genannten Stand der Technik wird also ein Grundkörper durch Spritzen kompletxiert. Komplettieren durch Zusammenfügen bereits fertig gegossener Einzelteile sieht dieser Stand der Technik nicht vor.

Aufgabe der Erfindung ist es, ein Verfahren und eine Vorrichtung zum Spritzgießen von Einzelteilen, insbesondere von Einzelteilen aus Kunststoff, und zum Montieren dieser Einzelteile zu Baugruppen zu schaffen, so daß bereits fertig gegossene Einzelteile in dieser Vorrichtung zum Spritzgießen montiert werden können.

Die Lösung der Aufgabe erfolgt mit einem Verfahren zum Spritzgießen von Einzelteilen, insbesondere von Einzelteilen aus Kunststoff, und zum Montieren dieser Einzelteile zu Baugruppen mit den Merkmalen des Anspruchs 1 und mit einer Vorrichtung zum Spritzgießen von Einzelteilen, insbesondere von Einzelteilen aus Kunststoff, und zum Montieren dieser Einzelteile zu Baugruppen mit den Merkmalen des Anspruchs 3.

Gemäß der Erfindung weist ein Verfahren zum Spritzgießen von Einzelteilen, insbesondere von Einzelteilen aus Kunststoff, und zum Montieren von Einzelteilen zu Baugruppen ein Werkzeug mit einer ersten Montageeinheit, die mit einer Oberseite eine Ebene aufspannt, und eine zweite Montageeinheit auf. Die zweite Montageeinheit ist sowohl parallel als auch senkrecht relativ zu der Ebene der ersten Montageeinheit beweglich. Arbeitsnester sind an der Oberseite der ersten Montageeinheit enthalten, und eine Unterseite der zweiten Montageeinheit ist mit Formnestern versehen, die mit den Arbeitsnestern zur Deckung kommen können, wenn die Unterseite der zweiten Montageeinheit auf die Oberseite der ersten Montageeinheit aufgelegt wird. In einem ersten Schritt eines Arbeitszyklusses wird mindestens einem Arbeitsnest formbares Kunststoffmaterial zugeführt, wenn die zweite Montageeinheit in einer ersten Position auf der ersten Montageeinheit aufliegt, so daß mindestens jeweils ein Einzelteil in dem mindestens einen Arbeitsnest geformt wird. Die zweite Montageeinheit hebt anschließend mit dem mindestens jeweils einen Einzelteil in mindestens einem der Formnester von der ersten Montageeinheit ab und das mindestens eine Einzelteil wird von dem mindestens einen Formnest in einer ersten Richtung zu einem weiteren Arbeitsnest transportiert und in dieser zweiten Position gegebenenfalls mit einem oder mit mehreren vorhandenen Einzelteilen zu einer Baugruppe montiert. Das mindestens eine Formnest nimmt das mindestens eine Einzelteil oder die Baugruppe aus dem weiteren Arbeitsnest auf und transportiert es weiter in der ersten Richtung über mindestens ein weiteres Arbeitsnest hinweg in eine dritte Position zu einem weiteren Arbeitsnest, und legt dort das mindestens eine Einzelteil oder die Baugruppe ab. Die zweite Montageeinheit bewegt sich dann entgegengesetzt zur ersten Richtung zurück in ihre erste Position, womit ein Arbeitszyklus beendet ist. Das Verfahren gemäß der Erfindung erlaubt es, innerhalb eines Werkzeugs, z. B. während eines Anfahrvorgangs mindestens ein Einzelteil, vorzugsweise während des Normalbetriebs mehrere Einzelteile gleichzeitig durch Spritzgießen zu fertigen und so zu transportieren, daß innerhalb des selben Werkzeugs diese spritzgegossenen Einzelteile montiert werden können, wobei im Normalbetrieb fortlaufend simultan Einzelteile gespritzt und anschließend fortlaufend simultan Einzelteile zu Baugruppen montiert werden. Besonders vorteilhaft ist dabei, daß die beim Spritzgießen erfolgte genaue lokale Zuordnung des Einzelteils in einem Arbeitsnest genutzt wird für die darauffolgende Montage, so daß die zur Montage erforderliche mühsame Repositionierung von gegossenen Einzelteilen, die z. B. nach dem Spritzgießen aus einer Maschine ausgeworfen wurden, entfällt. Entgegen dem Stand der Technik, bei dem immer weiter frische Spritzmasse einem gegossenen Grundkörper hinzugefügt wird und der daher bei der Werkstoffauswahl eingeschränkt ist, und schlechte Zykluszeiten und geringe Flexibilität mit sich bringt, werden gemäß der Erfindung bereits fertig gegossene Einzelteile montiert, so daß Werkstoffe gleicher Art verwendet werden können. Das simultane Spritzgiesen in mehreren Arbeitsnestern bringt niedrige Zykluszeiten. Da Spritzgießen der jeweiligen, unterschiedlich geformten Einzelteile in jeweils separaten Arbeitsnestern erfolgt, ist gemäß der Erfindung die Flexibilität der Formen nicht eingeschränkt durch die Bedingung, daß der Körper aus dem vorigen Spritzgang in die Spritzform des nächsten Spritzgangs passen muß, wie das beim Stand der Technik der Fall ist.

Eine bevorzugte Version des erfindungsgemäßen Verfahrens sieht vor, daß die zweite Montageeinheit von der ersten Position zur zweiten Position von einem ersten Arbeitsnest zu einem benachbarten Arbeitsnest und von der zweiten zur dritten Position über ein drittes Arbeitsnest hinweg zu einem vierten Arbeitsnest gefahren wird.

Eine erfindungsgemäße Vorrichtung zum Spritzgießen von Einzelteilen, insbesondere von Einzelteilen aus Kunststoff, und zum Montieren von Einzelteilen zu Baugruppen weist ein Werkzeug mit einer ersten Montageeinheit, die mit einer Oberseite eine Ebene aufspannt, und eine zweite Montageeinheit auf. Die zweite Montageeinheit ist sowohl parallel als auch senkrecht relativ zu der Ebene der ersten Montageeinheit beweglich. Arbeitsnester sind an der Oberseite der ersten Montageeinheit enthalten, und eine Unterseite der zweiten Montageeinheit ist mit Formnestern versehen, die mit den Arbeitsnestern zur Deckung kommen können, wenn die Unterseite der zweiten Montageeinheit auf die Oberseite der ersten Montageeinheit aufgelegt wird. Die Formnester sind mit Einrichtungen zum Formen, zum Transport und zum Auswerfen von Einzelteilen oder Baugruppen versehen. Die Arbeitsnester sind aus Spritz- und Montagenestern gebildet. Zufuhreinrichtungen für formbares Material zu den Spritznestern sind in der ersten Montageeinheit vorgesehen. Eine Steuervorrichtung steuert die zweite Montageeinheit in unterschiedliche translative und rotative Bewegungsrichtungen und in unterschiedlichen Bewegungsabständen und positioniert diese so, daß jeweils eines der Formnester in aufeinanderfolgenden Schritten mit verschiedenen Arbeitsnestern zusammenwirken kann. Ein Formnest der erfindungsgemäßen Vorrichtung wirkt jeweils mit einer begrenzten Anzahl von Spritz- und Montagenestern zusammen, vorzugsweise mit drei Spritz- oder Montagenestern. Die Formnester sind so gestaltet, daß in einer ersten Position ein Formnest in Zusammenwirkung mit einem Spritznest ein Einzelteil, z. B. ein Zahnrad, formen kann. Die Formnester sind weiter so gestaltet, daß beim Abheben der Formnester von den Spritznestern, die spritzgegossenen Einzelteile von den Formnestern mitgenommen werden. Die Formnester sind weiter mit Einrichtungen zum Auswerfen versehen, so daß spritzgegossene Einzelteile von den Formnestern in die Arbeitsnester,gefördert werden können. Weiter sind die Formnester so gestaltet, daß spritzgegossene Einzelteile aus einem vorhergehenden Arbeitszyklus zusammen mit montierten Einzelteilen aufgenommen und transportiert werden können, wobei die zweite Montageeinheit so gesteuert wird, daß die Formnester die montierten Einzelteile wieder in Montagenester zur weiteren Montage auswerfen.

Gemäß einer bevorzugten Ausgestaltung der Erfindung weist die Vorrichtung eine geradzahlige Anzahl von N Arbeitsnester auf, und die Anzahl der Formnester ist gleich N/2. Eine gleiche Anzahl von Spritz- und Montagenestern ist für einen erfindungsgemäßen Spritzgießvorgang besonders geeignet. Wirken die Formnester nur mit Spritznestern zusammen, ergibt sich eine günstige Anordnung, wenn jedem Spritznest ein Formnest gegenüberliegt.

Gemäß einer weiteren bevorzugten Ausgestaltung der Erfindung weist die Vorrichtung die Arbeitsnester in einer alternierenden Folge von Montage- und Spritznestern auf, so daß sich eine Spritz- und Montageabfolge und damit eine Bewegung der zweiten Montageeinheit ergibt, die vergleichsweise leicht zu steuern ist.

Gemäß einer weiteren bevorzugten Ausgestaltung der Erfindung ist eines der Arbeitsnester der Vorrichtung mit einer Auffangvorrichtung verbunden, in die aus dem Werkzeug ausfallende Einzelteile oder Baugruppen abgelegt werden.

Gemäß einer weiteren bevorzugten Ausgestaltung der Erfindung enthält das formbare Material plastifizierbaren Kunststoff, der sich besonders für das Spritzgießen eignet.

Gemäß einer weiteren bevorzugten Ausgestaltung der Erfindung ist mindestens eines der Montagenester mit einer Zufuhreinrichtung für formbares Material, vorzugsweise für vulkanisierbaren Gummi, versehen. Vorzugsweise kann in der erfindungsgemäßen Vorrichtung in einem der letzten Montagevorgänge die aus spritzgegossenen Einzelteilen zusammengesetzte Baugruppe so mit einer Gummibeschichtung versehen werden.

Gemäß einer weiteren bevorzugten Ausgestaltung der Erfindung sind die Zufuhreinrichtungen der erfindungsgemäßen Vorrichtung mit Verschlußeinrichtungen zum zeitgesteuerten Öffnen und Schließen versehen. Beim Anlaufen der erfindungsgemäßen Vorrichtung kann in einem ersten Arbeitszyklus nur eine erste Verschlußeinrichtung geöffnet werden, so daß ein Spritznest mit formbarem Material beaufschlagt wird, in einem zweiten Arbeitszyklus können die Verschlußeinrichtungen so geöffnet werden, daß das erste und ein zweites Spritznest mit formbarem Material beaufschlagt wird und so weiter. Beim, Abschalten der erfindungsgemäßen Vorrichtung können in einem letzten Arbeitszyklus alle Verschlußeinrichtungen geschlossen werden, so daß keines der Spritznester mehr mit formbarem Material beaufschlagt wird. Die weiteren Arbeitszyklen können bei geschlossenen Verschlußeinrichtungen zur Montage und zum Auswurf der noch im Werkzeug befindlichen Einzelteile genützt werden. Die von den Einzelteilen benötigten unterschiedlichen Mengen an formbarem Material, können durch die zeitgesteuerte Betätigung der Verschlußeinrichtungen in den Zufuhreinrichtungen berücksichtigt werden.

Gemäß einer weiteren bevorzugten Ausgestaltung der Erfindung sind 10 oder 12 Arbeitsnester in dem erfindungsgemäßen Werkzeug vorgesehen.

Die Erfindung soll im folgenden anhand eines besonders bevorzugten Ausführungsbeispiels dargestellt werden. Es zeigen:
- Fig. 1: eine erste Montageeinheit der erfindungsgemäßen Vorrichtung und
- Fig. 2: eine zweite Montageeinheit der erfindungsgemäßen Vorrichtung.

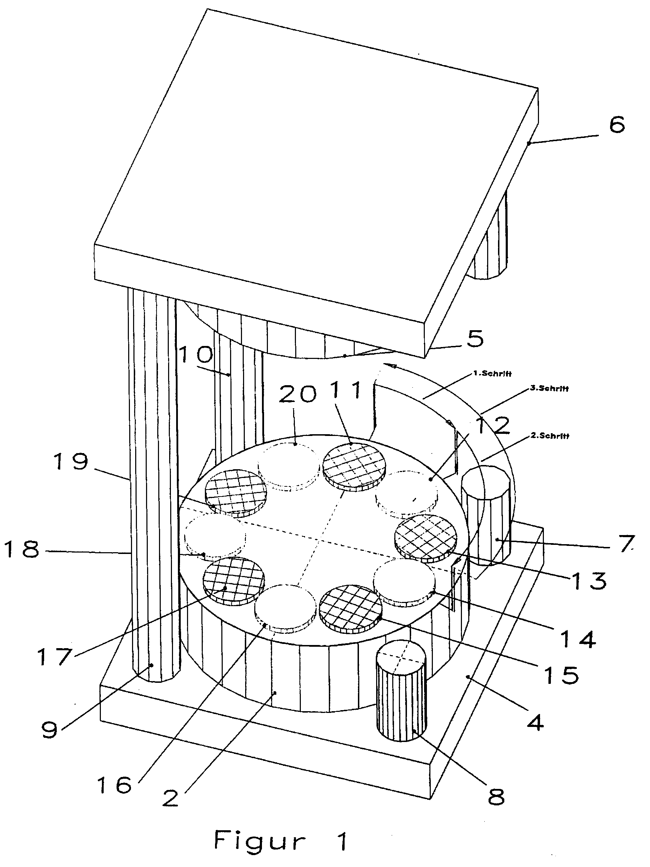

Fig. 1: Ein Werkzeug 1 weist eine erste Montageeinheit 2 auf, deren rotationssymmetrische Oberseite 3 eine Ebene aufspannt. Die erste Montageeinheit 2 ist auf einer rechteckigen Platte 4 fest montiert. Eine zweite Montageeinheit 5 ist drehbar auf einer Platte 6 befestigt und ist mit der Platte 6 entlang Maschinenholmen 7, 8, 9 und 10 senkrecht relativ zu der Ebene der Oberseite 3 der ersten Montageeinheit 2 beweglich.

Arbeitsnester 11, 12, 13, 14, 15, 16, 17, 18, 19 und 20 sind in der Oberseite 3 der ersten Montageeinheit 2 angeordnet. Die Arbeitsnester 11, 12, 13, 14, 15, 16, 17, 18, 19 und 20 können durch Ausfräsungen mit oder ohne Einsätze in der Oberseite 3 der ersten Montageeinheit 2 angebracht sein. Montageeinheit 2 ist mit einer Zufuhreinrichtung (nicht dargestellt) für formbares Material, vorzugsweise plastifizierbaren Kunststoff, versehen. Die Zufuhreinrichtungen weisen Verschlußeinrichtungen auf zur Steuerung der Abgabe des formbaren Materials in die Arbeitsnester 11, 13, 15, 17 und 19.

Ein Montagenest, vorzugsweise das Montagenest 20, kann mit einer Zufuhreinrichtung für flüssiges Gummi, einen andersfarbigen oder andersartigen aushärtbaren Kunststoff versehen sein, das beim letzten Montagevorgang vor Auswerfen des Getriebes über das fertige Getriebe vulkanisiert wird.

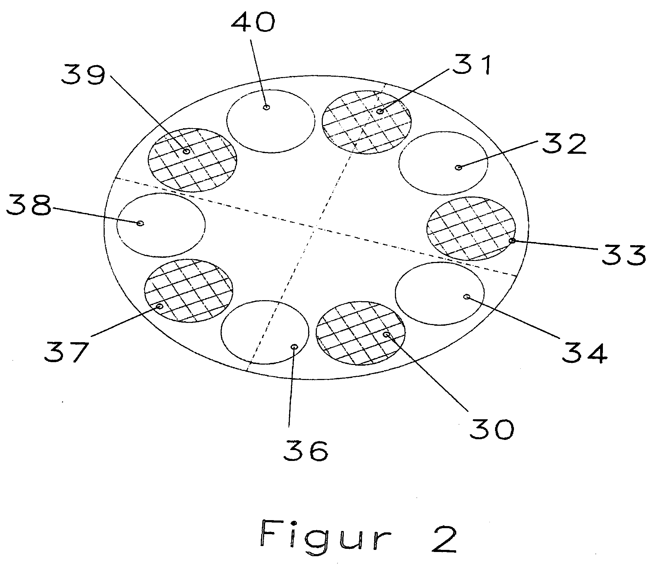

Fig. 2: Die zweite Montageeinheit 5 weist in einer Unterseite 30, die der Oberseite 3 der Montageeinheit 2 zugewandt ist, Formnester 31, 32, 33, 34, 35, 36, 37, 38, 39 und 40 auf. Die zweite Montageeinheit 5 wird von einer Steuereinrichtung (nicht dargestellt) entlang den Maschinenholmen 7, 8, 9 und 10 translativ und in der Platte 6 rotativ in einer ersten Richtung, vorzugsweise im Uhrzeigersinn, bewegt.

Die Formnester 31, 32, 33, 34, 35, 36, 37, 38, 39 und 40 sind mit Transport- und Auswerfeinrichtungen (nicht dargestellt) ausgestattet. Die Auswerfeinrichtungen werden von einer Steuereinrichtung (nicht dargestellt) kontrolliert.

### Verfahren zum Betrieb der erfindungsgemäßen Vorrichtung

Das erfindungsgemäße Verfahren und die erfindungsgemäße Vorrichtung soll anhand der für ein Getriebe aus Plastik (nicht dargestellt) erforderlichen Verfahrensschritte zum Spritzgießen und der für das Montieren des Getriebes durchgeführten Schritte dargestellt werden.

### Anfahren der Vorrichtung

Begonnen wird mit dem Spritzgießen eines Gehäuseteils des Getriebes in dem Spritznest 11. Die zweite Montageeinheit 5 wird auf die erste Montageeinheit 2 des Werkzeugs 1 abgesenkt und die Formnester 31, 32, 33, 34, 35, 36, 37, 38, 39 und 40 liegen dann dichtend auf den Arbeitsnester 11, 12, 13, 14, 15, 16, 17, 18, 19 und 20 auf. Die Zufuhreinrichtung sperrt die Verschlußeinrichtungen zu den Spritznestern 13, 15, 17 und 19 und öffnet nur die Zufuhr von flüssigem Plastikmaterial zu dem Spritznest 11.

Formnest 31 und Spritznest 11 wirken zusammen, so daß das Gehäuseteil des Getriebes geformt wird. Ist das Gehäuseteil geformt und fest, hebt die zweite Montageeinheit 5 von der Oberseite 3 der Montageeinheit 2 ab, wobei das Formnest 31 das Gehäuseteil mitnimmt. Eine Steuereinrichtung veranlaßt die Drehung der zweiten Montageeinheit 5 in einer ersten Richtung um einen Winkel, der so groß ist, daß Formnest 31 über das Montagenest 12 der ersten Montageeinheit 2 gedreht wird. Die zweite Montageeinheit 5 wird abgesenkt, aber die Auswerfeinrichtung von Formnest 31 nicht betätigt. Die zweite Montageeinheit 5 wird wieder angehoben, und weiter in der ersten Richtung um einen Winkel gedreht, der so groß ist, daß das Formnest 31 über das Spritznest 13 hinweg zum Montagenest 14 der ersten Montageeinheit 2 gedreht wird. Die zweite Montageeinheit 5 wird abgesenkt und die Auswerfeinrichtung von Formnest 31 betätigt, so daß das Gehäuseteil in dem Montagenest 14 der ersten Montageeinheit 2 abgelegt wird. Die zweite Montageeinheit 5 wird um drei Arbeitsnester in ihre erste Position über dem Spritznest 11 der ersten Montageeinheit 2 zurückgedreht und der erste Arbeitszyklus ist beendet.

In einem zweiten Arbeitszyklus wird mit dem Spritzgießen eines weiteren Gehäuseteils des Getriebes in dem Spritznest 11 und eines Sonnenrads des Getriebes in dem Spritznest 13 der ersten Montageeinheit 2 fortgefahren. Die zweite Montageeinheit 5 wird auf die erste Montageeinheit 2 des Werkzeugs 1 abgesenkt und die Formnester 31, 32, 33, 34, 35, 36, 37, 38, 39 und 40 liegen dann dichtend auf den Arbeitsnester 11, 12, 13, 14, 15, 16, 17, 18, 19 und 20 auf. Die Zufuhreinrichtung sperrt die Verschlußeinrichtungen zu den Spritznestern 15, 17 und 19 und öffnet nur die Zufuhr von flüssigem Plastikmaterial zu den Spritznestern 11 und 13.

Formnest 31 und Spritznest 11 wirken zusammen, so daß das Gehäuseteil des Getriebes geformt wird, und Formnest 33 und Spritznest 13 wirken zusammen, so daß das Sonnenrad geformt wird. Ist das Gehäuseteil und das Sonnenrad geformt und fest, hebt die Montageeinheit 5 von der Oberseite 3 ab, wobei das Formnest 31 das Gehäuseteil und das Formnest 33 das Sonnenrad mitnimmt. Die Steuereinrichtung veranlaßt die Drehung der zweiten Montageeinheit 5 in der ersten Richtung um einen Winkel, der so groß ist, daß Formnest 31 über das Montagenest 12 und Formnest 33 über das Montagenest 14 der ersten Montageeinheit 2 gedreht wird. Die zweite Montageeinheit 5 wird abgesenkt, die Auswerfeinrichtung von Formnest 31 nicht aber die Auswerfeinrichtung von Formnest 33 betätigt, so daß das Sonnenrad in das beim ersten Arbeitszyklus in Montagenest 14 abgelegte Gehäuseteil präzise an der richtigen Stelle im Gehäuseteil abgesetzt wird. Formnest 31 transportiert weiter das Gehäuseteil und Formnest 33 greift das Gehäuseteil mit dem darin montierten Sonnenrad. Die zweite Montageeinheit 5 wird wieder angehoben, und weiter in der ersten Richtung um einen Winkel gedreht, der so groß ist, daß das Formnest 31 über das Montagenest 14 und Formnest 33 über das Montagenest 16 der ersten Montageeinheit 2 gedreht wird. Die zweite Montageeinheit 5 wird abgesenkt und die Auswerfeinrichtungen von Formnest 31 und Formnest 33 betätigt, so daß das Gehäuseteil in dem Montagenest 14 der ersten Montageeinheit 2 und das Gehäuseteil mit dem Sonnenrad in dem Montagenest 16 der ersten Montageeinheit 2 abgelegt wird. Die zweite Montageeinheit 5 wird um drei Arbeitsnester in ihre erste Position über dem Spritznest 11 der ersten Montageeinheit 2 zurückgedreht und der zweite Arbeitszyklus ist beendet.

In einem dritten Arbeitszyklus sperren Verschlußeinrichtungen die Zufuhr von Material zu den Spritznestern 17 und 19 und öffnen die Zufuhr von flüssigem Plastikmaterial zu den Spritznestern 11, 13 und 15. Im Spritznest 15 werden in Zusammenwirken mit dem Formnest 35 Planetenräder gespritzt, die von Formnest 35 im zweiten Schritt in dem Montagenest 16 in das Gehäuseteil mit dem Sonnenrad montiert werden, und das Gehäuseteil mit den montierten Planeten- und Sonnenrädern wird von dem Formnest 35 im dritten Schritt anschließend in Montagenest 18 abgesetzt.

Im vierten Arbeitszyklus sperrt eine Verschlußeinrichtung die Zufuhr von Material zu dem Spritznest 19 und die Zufuhr von flüssigem Plastikmaterial zu den Spritznestern 11, 13, 15 und 17 ist freigegeben. Im Spritznest 17 kann in Zusammenwirken mit dem Formnest 37 ein Abtriebskörper gespritzt werden, der von Formnest 37 im zweiten Schritt in dem Montagenest 18 auf das Gehäuseteil mit den Planeten- und Sonnenrädern montiert wird, und das Gehäuseteil mit den montierten Planeten- und Sonnenrädern und dem montierten Abtriebskörper wird von dem Formnest 37 in dem dritten Schritt anschließend in Montagenest 18 abgesetzt.

Im fünften Arbeitszyklus öffnen die Verschlußeinrichtungen die Zufuhr von flüssigem Plastikmaterial zu den Spritznestern 11, 13, 15, 17 und 19. Im Spritznest 19 kann in Zusammenwirken mit dem Formnest 39 ein Haltering gespritzt werden, der vom Formnest 39 im zweiten Schritt in dem Montagenest 20 an das Gehäuseteil mit den montierten Planeten- und Sonnenrädern und dem montierten Abtriebskörper montiert wird, und das komplett montierte Getriebe Gehäuseteil mit den Planeten- und Sonnenrädern und dem montierten Haltering und Abtriebskörper wird von dem Formnest 39 in dem dritten Schritt anschließend in Montagenest 12 abgesetzt. Montagenest 12 ist mit einer Ausgabeeinrichtung, wie z. B. einer Rutsche (nicht dargestellt), versehen, von der das fertige Getriebe in einen Auffangbehälter (nicht dargestellt) gelangt.

### Normalbetrieb

Im Normalbetrieb, wenn die Verschlußeinrichtungen die Zufuhr von flüssigem Plastikmaterial zu den Spritznestern 11, 13, 15, 17 und 19 in einem ersten Schritt eines Arbeitszyklusses bei jedem Arbeitszyklus freigeben, werden simultan ein Gehäuseteil, Planeten- und Sonnenrädern, ein Haltering und ein Abtriebskörper in den jeweiligen Spritznestern 11, 13, 15, 17 und 19 gespritzt.

In einem zweiten Schritt eines jeden Arbeitszyklusses des Normalbetriebs werden durch Heben und Drehen in einer ersten Richtung von der zweiten Montageeinheit simultan ein Gehäuse, ein Sonnenrad, Planetenräder, ein Abtriebskörper und ein Haltering in benachbarte Montagenester der ersten Montageeinheit 2 transportiert, wobei nur das erste Formnest 31 das Gehäuseteil nicht in dem Montagenest 12 absetzt. Das Sonnenrad, die Planetenräder, der Abtriebskörper und der Haltering werden in den benachbarten Montagenester der ersten Montageeinheit 1 jeweils in ein Gehäuse, ein Gehäuse mit Sonnenrad, ein Gehäuse mit Sonnenrad und Planetenrädern, und ein Gehäuse mit Sonnen- und Planetenrädern und einem Abtriebskörper montiert, die aus einem vorhergehenden Arbeitszyklus in diesen benachbarten Montagenestern bereits positioniert sind.

In einem dritten Schritt eines jeden Arbeitszyklusses des Normalbetriebs werden durch Heben und Drehen weiter in der ersten Richtung von der zweiten Montageeinheit simultan ein Gehäuse, ein Gehäuse mit Sonnenrad, ein Gehäuse mit Sonnenrad und Planetenrädern, ein Gehäuse mit Sonnen- und Planetenrädern und einem Abtriebskörper und ein Gehäuse mit Sonnen- und Planetenrädern, einem Abtriebskörper und einem Haltering über jeweils ein Spritznest hinweg in benachbarte Montagenester der ersten Montageeinheit 2 transportiert.

In einem vierten und letzten Schritt eines jeden Arbeitszyklusses des Normalbetriebs wird die zweite Montageeinheit 5 durch Heben und Drehen entgegengesetzt zur ersten Richtung mit leeren Formnestern über drei Arbeitsnester der ersten Montageeinheit 2 hinweg in die erste Position zurückgefahren.

### Abschaltbetrieb

Zum Abschalten des erfindungsgemäßen Verfahrens zum Spritzgießen von Einzelteilen, insbesondere von Einzelteilen aus Kunststoff, und zum Montieren von Einzelteilen zu Baugruppen kann jeweils eine weitere Verschlußeinrichtung die Zufuhr von flüssigem Plastikmaterial zu den Spritznestern 11, 13, 15, 17 und 19 bei jedem Arbeitszyklus sperren, so daß in einem ersten Arbeitszyklus des Absdhaltbetriebs kein formbares Material mehr zu dem Spritznest 11 gelangt, in einem zweiten Arbeitszyklus des Abschaltbetriebs kein formbares Material mehr zu den Spritznestern 11 und 13 gelangt, in einem dritten Arbeitszyklus des Abschaltbetriebs kein formbares Material mehr zu den Spritznestern 11, 13 und 15 gelangt, u. s. w. bis die Zufuhr von formbarem Material zu allen Spritznestern 11, 13, 15, 17 und 19 gesperrt ist und ein letztes komplettes Getriebe aus dem Werkzeug 1 ausgeworfen wird. Das Abschalten des erfindungsgemäßen Verfahrens zum Spritzgießen von Einzelteilen kann auch so erfolgen, daß die Zufuhr von formbarem Material zu allen Spritznestern 11, 13, 15, 17 und 19 gleichzeitig gesperrt wird, so daß fertig gespritzte Einzelteile, die in dem Werkzeug 1 enthalten sind, nicht zu einem kompletten Getriebe zusammengebaut werden.

## Patentansprüche

1. Verfahren zum Spritzgießen von Einzelteilen, insbesondere von Einzelteilen aus Kunststoff, und zum Montieren von Einzelteilen zu Baugruppen mit
einem Werkzeug (1),
einer ersten Montageeinheit (2) dieses Werkzeugs (1), die mit einer Oberseite (3) eine Ebene aufspannt,
einer zweiten Montageeinheit (5) dieses Werkzeugs (1), die sowohl parallel als auch senkrecht relativ zu der Ebene der ersten Montageeinheit (2) dieses Werkzeugs (1) zueinander beweglich sind, und
Arbeitsnestern (11, 12, 13, 14, 15, 16, 17, 18, 19, 20) an der Oberseite (3) der ersten Montageeinheit (2),
**dadurch gekennzeichnet, daß**
eine Unterseite der zweiten Montageeinheit (5) mit Formnestern (31, 32, 33, 34, 35, 36, 37, 38, 39 und 40) versehen ist, die mit den Arbeitsnestern (11, 12, 13, 14, 15, 16, 17, 18, 19, 20) zur Deckung kommen können, wenn die Unterseite der zweiten Montageeinheit (5) auf der Oberseite (3) der ersten Montageeinheit (2) aufliegt, wobei in einem ersten Schritt eines Arbeitszyklusses formbares Kunststoffmaterial zugeführt wird zu mindestens einem Arbeitsnest, wenn die zweite Montageeinheit (5) in einer ersten Position auf der ersten Montageeinheit (2) aufliegt, so daß mindestens jeweils ein Einzelteil in mindestens einem der Arbeitsnester geformt wird,
die zweite Montageeinheit (5) anschließend mit dem mindestens jeweils einen Einzelteil in mindestens einem der Formnester von der ersten Montageeinheit (2) abhebt und das mindestens eine Einzelteil aus dem mindestens einen Arbeitsnest in einer ersten Richtung in mindestens ein weiteres Arbeitsnest transportiert in eine zweite Position zur Montage zu einer Baugruppe, das mindestens eine Formnest das mindestens eine Einzelteil oder die Baugruppe aus dem mindestens einen weiteren Arbeitsnest aufnimmt und in der ersten Richtung über mindestens ein weiteres Arbeitsnest hinweg in eine dritte Position zu mindestens einem weiteren Arbeitsnest transportiert, in dem das mindestens eine Einzelteil oder die Baugruppe abgelegt wird, und die zweite Montageeinheit (5) anschließend, entgegengesetzt zur ersten Richtung, zurück in seine erste Position gefahren wird.

2. Verfahren gemäß Anspruch 1, dadurch gekennzeichnet, daß von der ersten Position zur zweiten Position von einem ersten Arbeitsnest zu einem benachbarten Arbeitsnest, von der zweiten zur dritten Position über ein Arbeitsnest hinweg zu einem weiteren Arbeitsnest gefahren wird.

3. Vorrichtung zum Spritzgießen von Einzelteilen,
insbesondere von Einzelteilen aus Kunststoff, und zum Montieren von Einzelteilen zu Baugruppen mit den Merkmalen des Oberbegriffs des Anspruchs 1,
**dadurch gekennzeichnet, daß**
eine Unterseite der zweiten Montageeinheit (5) mit Formnestern (31, 32, 33, 34, 35, 36, 37, 38, 39 und 40) versehen ist, die mit den Arbeitsnestern (11, 12, 13, 14, 15, 16, 17, 18, 19, 20) zur Deckung kommen können, wenn die Unterseite der zweiten Montageeinheit (5) auf der Oberseite (3) der ersten Montageeinheit (2) aufgelegt wird, wobei die Formnester (31, 32, 33, 34, 35, 36, 37, 38, 39 und 40) mit Einrichtungen zum Formen, zum Transport, zum Positionieren und zum Auswerfen von Einzelteilen oder Baugruppen versehen sind,
die Arbeitsnester (11, 12, 13, 14, 15, 16, 17, 18, 19, 20) aus Spritz- und Montagenestern gebildet sind, Zufuhreinrichtungen für formbares Material zu den Spritznestern in der ersten Montageeinheit vorgesehen sind und eine Steuervorrichtung vorgesehen ist, die die zweite Montageeinheit (5) in unterschiedlichen Bewegungsrichtungen und Bewegungsabständen steuert, so daß die Formnester (31, 32, 33, 34, 35, 36, 37, 38, 39 und 40) mit den Arbeitsnestern (11, 12, 13, 14, 15, 16, 17, 18, 19, 20) zusammenwirken.

4. Vorrichtung gemäß Anspruch 3, dadurch gekennzeichnet, daß die Arbeitsnester (11, 12, 13, 14, 15, 16, 17, 18, 19, 20) eine geradzahlige Anzahl N bilden und die Anzahl der Formnester gleich N/2 ist.

5. Vorrichtung gemäß Anspruch 3, dadurch gekennzeichnete daß die Arbeitsnester (11, 12, 13, 14, 15, 16, 17, 18, 19, 20) eine alternierende Folge von Montage- und Spritznestern bilden.

6. Vorrichtung gemäß Anspruch 3, dadurch gekennzeichnet, daß eines der Arbeitsnester (11, 12, 13, 14, 15, 16, 17, 18, 19, 20) mit einer Auffangvorrichtung verbunden ist.

7. Vorrichtung gemäß Anspruch 3, dadurch gekennzeichnet, daß das formbare Material plastifizierbaren Kunststoff enthält.

8. Vorrichtung gemäß Anspruch 3, dadurch gekennzeichnet, daß mindestens eines der Montagenester mit einer Zufuhreinrichtung für formbares Material, vorzugsweise für vulkanisierbaren Gummi, versehen ist.

9. Vorrichtung gemäß Anspruch 3, dadurch gekennzeichnet, daß die Zufuhreinrichtungen mit Verschlußeinrichtungen zum zeitgesteuerten Öffnen und Schließen der Zufuhreinrichtungen versehen sind.

10. Vorrichtung gemäß Anspruch 3, dadurch gekennzeichnet, daß 10 oder 12 Arbeitsnester vorgesehen sind.
